(19) **Europäisches Patentamt / European Patent Office / Office européen des brevets**

(11) **EP 4 350 806 A1**

(12) # EUROPEAN PATENT APPLICATION
published in accordance with Art. 153(4) EPC

(43) Date of publication:
**10.04.2024 Bulletin 2024/15**

(21) Application number: **22816257.4**

(22) Date of filing: **22.02.2022**

(51) International Patent Classification (IPC):
*H01M 4/134* [(2010.01)]    *H01M 4/38* [(2006.01)]
*H01M 4/66* [(2006.01)]    *H01M 4/1395* [(2010.01)]
*H01M 4/04* [(2006.01)]    *H01M 10/052* [(2010.01)]

(52) Cooperative Patent Classification (CPC):
**H01M 4/04; H01M 4/134; H01M 4/1395;
H01M 4/38; H01M 4/66; H01M 10/052;** Y02E 60/10

(86) International application number:
**PCT/KR2022/002556**

(87) International publication number:
**WO 2022/255593 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.06.2021 KR 20210071887**

(71) Applicant: **Seoul National University R&DB
Foundation
Seoul 08826 (KR)**

(72) Inventors:
• **LEE, Kyu Tae
Seoul 06610 (KR)**
• **KWON, Bomee
Gunpo-si, Gyeonggi-do 15875 (KR)**
• **OH, Jeongeun
Suwon-si, Gyeonggi-do 16679 (KR)**
• **JO, Seunghyeon
Seoul 08826 (KR)**

(74) Representative: **Newcombe, Christopher David et
al
Venner Shipley LLP
200 Aldersgate
London EC1A 4HD (GB)**

(54) **LITHIUM METAL THIN FILM COMPOSITE AND PREPARATION METHOD THEREOF**

(57) The present invention relates to a lithium metal thin film composite and a method for preparing the lithium metal thin film composite, the lithium metal thin film composite comprising: a plate-shaped support having at least one surface coated with an inorganic material; and a lithium metal thin film formed by a plurality of spherical lithium metal fine particles coming into contact with one another on the plate-shaped support, and the method comprising a step of growing a plurality of spherical lithium metal fine particles on the plate-shaped support by applying a current to a lithium supply source and the plate-shaped support immersed in an electrolyte solution, wherein the plate-shaped support has at least one surface coated with an inorganic material, and the electrolyte solution is stirred at one or more points selected from among before applying the current, after applying the current, and while applying the current.

[FIG. 1]

**Description**

[Technical Field]

The present invention relates to a lithium metal thin film composite and a method of manufacturing the same.

[Background Art]

Currently, most commercially available lithium secondary batteries use a layered oxide cathode and an anode made of graphite material. In recent years, the demand for larger batteries and higher energy density battery performance has increased, making it essential to develop next-generation materials for the secondary batteries. The energy density of these lithium secondary batteries has already reached close to the theoretical value. Accordingly, researches on lithium metal, which has the highest theoretical capacity, the lowest reduction potential, and a small atomic weight, are actively being conducted as the most ideal anode material in terms of energy density.

However, currently commercialized lithium metal thin films use a method of rolling lithium ingot or thermal vapor deposition at a high temperature of 450 °C, which has the disadvantages of not being able to use various lithium sources other than the lithium ingot and having a complicated production process. In addition, there is a risk of electrode short-circuiting due to dendritic growth in conventional lithium metal thin films, and continuous charge/discharge produces inactive lithium, resulting in the disadvantages of low Coulombic efficiency and poor lifespan characteristics.

Therefore, there is a need to develop a type of lithium metal electrode that can be produced using a simpler process than conventional ones, not requiring high-cost or high-temperature manufacturing processes, and that can suppress the dendritic growth of lithium metal.

More specifically, there is a demand for a technology that minimizes the dendritic growth of lithium metal through a process that is simpler than currently used rolling processes or processes using thermal vapor deposition, and that manufactures lithium metal thin films with a large surface area compared to the case where the conventional electroplating method is used.

[Disclosure]

[Technical Problem]

The present invention is directed to providing a lithium metal thin film composite having a large surface area due to a plurality of spherical lithium metal particulates being in contact with each other. Therefore, the present invention is directed to providing a lithium secondary battery that is capable of minimizing polarization phenomena in the process of charging and discharging and has improved lifespan characteristics.

[Technical Solution]

One aspect of the present invention provides a lithium metal thin film composite including: a plate-shaped support having an inorganic material coated on a surface of at least one side thereof; and a lithium metal thin film formed by a plurality of spherical lithium metal particulates being in contact with each other on the plate-shaped support.

Another aspect of the present invention provides a method of manufacturing a lithium metal thin film composite, the method includes growing a plurality of spherical lithium metal particulates on a plate-shaped support by applying a current to the plate-shaped support immersed in an electrolyte solution and a lithium supply source, in which the plate-shaped support has at least one surface coated with an inorganic material, and in which the method includes stirring the electrolyte solution on at least one occasion selected from before applying the current, after applying the current, or simultaneously with applying the current.

Still another aspect of the present invention provides a lithium secondary battery, including: a cathode; an anode including the lithium metal thin film composite described above; and an electrolyte.

[Advantageous Effects]

As a lithium metal thin film composite of the present invention is formed such that a plurality of spherical lithium metal particulates are uniformly and densely packed on a plate-shaped support coated with an inorganic material on at least one surface thereof, it is possible to form the lithium metal thin film composite with a large surface area and thus lower effective current density compared to a lithium metal thin film manufactured by a conventional rolling or thermal deposition method, and it is possible to suppress the dendritic growth of lithium metal, and to exhibit excellent lifespan characteristics and voltage characteristics.

In addition, a method for manufacturing a lithium metal thin film according to the present invention uses a simple electrolytic reduction method, but through a mass transfer effect by stirring, the dendritic growth of lithium metal can be suppressed without any conventional rolling or thermal deposition at a high temperature.

[Description of Drawings]

FIG. 1 is a view illustrating SEM photographs of a surface and cross section of a lithium anode according to Example 1 of the present invention.
FIG. 2 is a view illustrating SEM photographs of a surface and cross section of a lithium anode according to Example 2 of the present invention.
FIG. 3 is a view illustrating SEM photographs of a surface and cross section of a lithium anode according to Example 3 of the present invention.
FIG. 4 is a view illustrating SEM photographs of a surface and cross section of a lithium anode according to Example 4 of the present invention.
FIG. 5 is a view illustrating SEM photographs of a surface and cross section of a lithium anode according to Example 5 of the present invention.
FIG. 6 is a view illustrating SEM photographs of a surface and cross section of a lithium anode according to Example 6 of the present invention.
FIG. 7 is a view of an SEM photograph of lithium metal particulates according to Comparative Example 1 of the present invention.
FIG. 8 is a view of an SEM photograph of lithium metal particulates according to Comparative Example 2 of the present invention.
FIG. 9 is a view of SEM photographs of lithium metal particulates according to Comparative Example 3 of the present invention.
FIG. 10 is a view of an SEM photograph of lithium metal particulates according to Comparative Example 4 of the present invention.
FIG. 11 is a view illustrating results of measuring battery capacity of a secondary battery using the lithium anode of Example 6 and Comparative Example 1 according to Experimental Example 1 of the present invention.
FIG. 12 is a view illustrating a result of measuring lifespan characteristics of a secondary battery using the lithium anode of Example 6 according to Experimental Example 2 of the present invention.
FIG. 13 is a view illustrating a result of measuring lifespan characteristics of a secondary cell using the lithium anode of Comparative Example 1 according to Experimental Example 2 of the present invention.
FIG. 14 is a view illustrating results of measuring lifespan characteristics of a secondary battery using the lithium anode of Comparative Example 2 according to Experimental Example 2 of the present invention.

[Modes of the Invention]

Hereinafter, the present invention will be described in detail.
One aspect of the present disclosure provides a lithium metal thin film composite.
The lithium metal thin film composite may include: a plate-shaped support having an inorganic material coated on a surface of at least one side thereof; and a lithium metal thin film formed by a plurality of spherical lithium metal particulates being in contact with each other on the plate-shaped support.
The term particulate is a concept that includes a primary particle of the metal in the present invention, or a secondary particle as an aggregate formed therefrom, and a lithium metal particulate may mean a primary particle and/or a secondary particle of lithium metal in the present invention.
The spherical shape is not necessarily a sphere, but may mean to include all of a sphere, a squashed sphere, or an ellipse. An eccentricity (e) of a cross-section of the spherical lithium metal particulate may be $0 \leq e < 1$, specifically $0 \leq e < 0.5$, $0 \leq e < 0.2$, or $0 \leq e < 0.1$.
An average diameter of the spherical lithium metal particulates may be 1 to 10 $\mu$m. The average diameter of the spherical lithium metal particulates may mean an arithmetic average of the diameters of 20 spherical lithium metal particulates identified in an SEM photograph (using a JSM-7800F (5 kV) of JEOL company) of a cross section in a thickness direction for the manufactured lithium metal thin film composite. Alternatively, the average diameter may be measured through results from an image processing program such as Image J.
When the average diameter of the spherical lithium metal particulates satisfies the range above, the spherical lithium metal particulates are stacked in plural to form a multi-layer (in case of a multi-layer electrode), which has a much higher surface area than that of a conventional commercialized 2D form of foil, and thus may have low overvoltage and high lifespan characteristics.

The average diameter of the plurality of spherical lithium metal particulates may have a standard deviation of 0.3 to 1.2 $\mu$m.

The standard deviation of the average diameter of the plurality of spherical lithium metal particulates may be calculated using Formula 1 below for 20 samples selected to obtain the average diameter of the lithium metal particulates obtained with a program such as Image J.

[Formula 1]

$$[\Sigma\{(\text{diameter of each spherical lithium metal particulate})_i - (\text{average diameter of}$$

$$\text{spherical lithium metal particulates})\}^2 / 20]^{1/2} \ (i=\text{sample number, 1 to 20})$$

When the standard deviation of the average diameter of the plurality of spherical lithium metal particulates satisfies the range above, the overvoltage characteristics and the lifespan characteristics may be improved as the average diameter of the plurality of spherical lithium metal particulates is uniform.

A region composed of the plurality of spherical lithium metal particulates may be understood in the same concept as a lithium metal thin film, and the region composed of the plurality of spherical lithium metal particulates may have a porosity of 20 to 40%. When the porosity of the region composed of the plurality of spherical lithium metal particulates satisfies the range above, the effective current density applied may be lowered as the surface area is enlarged, thereby inhibiting the dendritic growth of the lithium metal.

An average thickness of a region formed by the spherical lithium metal particulates being in contact with each other is the same concept as an average thickness of a lithium metal thin film, in which the average thickness of the region formed by the spherical lithium metal particulates being in contact with each other may be 1 to 30 $\mu$m, or may be 20 to 30 $\mu$m.

The average thickness of the region formed by the spherical lithium metal particulates being in contact with each other may mean an average of heights of the regions formed by the lithium metal particulates identified in the SEM photograph of the manufactured lithium metal thin film composite.

In particular, when lithium metal is used in the secondary battery, an electrode in the form of at least a certain thickness of lithium being present is required due to the high reactivity of lithium. When the average thickness of the area formed by the spherical lithium metal particulates being in contact with each other satisfies the range above, it has an excellent effect of improving the cycle performance by delaying the depletion of the electrode active material due to the consumption of lithium during the cycle process. Accordingly, it is possible to provide a somewhat thicker form of lithium electrode in the form of a multi-layer that is capable of lowering the overvoltage during cycling.

The support has a low electrical resistance and serves to transfer a current during charge and discharge, in which the support is not limited as long as the support is not composed of an alloy with lithium, and may include, for example, a metal foil including at least one selected from titanium, stainless steel (SUS), nickel, and molybdenum, or an alloy thereof.

The support is a plate-shaped support, in which at least one surface thereof may be coated with an inorganic material. Being coated with an inorganic material on at least one surface thereof may include, but is not limited to, being coated with an inorganic material on one surface of the plate-shaped support, or being coated with an inorganic material covering all of the plate-shaped support.

The inorganic material may serve as a resistance layer when the lithium is electrodeposited on the support, in which the inorganic material may include an inorganic oxide, for example, the inorganic material may include at least one inorganic oxide selected from alumina ($Al_2O_3$), titanium dioxide ($TiO_2$), barium titanate ($BaTiO_3$), and silicon dioxide ($SiO_2$).

When an inorganic material is coated on at least one surface of the plate-shaped support, 95 % or more of the area of the surface of the plate-shaped support on which the inorganic material is coated may be coated with the inorganic material, more specifically, 99 % or more of the area may be coated with the inorganic material, and preferably 100 % of the area may be coated with the inorganic material.

The inorganic material coated on at least one surface of the plate-shaped support may be coated with a thickness of 10 to 40 nm. When the thickness of an inorganic material layer coated on at least one surface of the plate-shaped support satisfies the range above, it is possible to manufacture an electrode in the form in which the surface area of the electrode increases and the overvoltage is applied smaller because electron tunneling can occur while the inorganic material layer serves as a resistance layer to the electrodeposition of lithium on the plate-shaped support. In addition, the lithium metal particulate formed on said plate-shaped support may form in a spherical shape and dendritic growth may be inhibited.

The plurality of spherical lithium metal particulates may be formed on the surface on which the inorganic material is coated. When an inorganic material is coated on at least one surface of the support, a plurality of lithium metal particulates may be formed in a spherical shape on the support, such that the formed lithium metal thin film has a large surface area, which may inhibit dendritic growth of the lithium metal on the support, may result in an excellent Coulombic efficiency, and/or may result in improved lifetime characteristics.

The lithium metal thin film composite may be used as an electrode by itself, more specifically as an anode, and may be used as an electrode including the lithium metal thin film composite, for example as an anode including the lithium metal thin film composite.

The electrode is a concept that includes any electrode that can be used in an electrochemical reaction, for example, may mean an electrode used in a primary battery, secondary battery, fuel cell, or a reaction such as electrolysis or electrolytic reduction. The anode may mean an electrode used as an anode among the electrodes.

Further, one aspect of the present invention provides a method of manufacturing a lithium metal thin film composite.

The method of manufacturing the lithium metal thin film composite, may include growing a plurality of spherical lithium metal particulates on a plate-shaped support by applying a current to the plate-shaped support immersed in an electrolyte solution and a lithium supply source, in which the plate-shaped support has at least one surface coated with an inorganic material, and in which the method may include stirring the electrolyte solution on at least one occasion selected from before applying the current, after applying the current, or simultaneously with applying the current.

The electrolyte solution may include an organic solvent including a lithium salt. The lithium salt may include, but is not limited to, LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiAsF$_6$, LiSbF$_6$, LiAlCl$_4$, CH$_3$SO$_3$Li, CF$_3$SO$_3$Li, (CF$_3$SO$_2$)$_2$NLi (LiTFSI), lithium chloroborane, lithium low aliphatic carbonate, lithium phenylborate, or a mixture thereof.

The organic solvent may be used without particular limitation as long as it can serve as a medium in which ions can move in the electrolytic reduction reaction. Specifically, the organic solvent may be an ester-based solvent, such as methyl acetate, ethyl acetate, γ-butyrolactone, or ε-caprolactone; an ether-based solvent, such as dibutyl ether or tetrahydrofuran; a ketone-based solvent, such as cyclohexanone; an aromatic hydrocarbon solvent such as benzene, or fluorobenzene; a carbonate-based solvent, such as dimethylcarbonate (DMC), diethylcarbonate (DEC), methylethylcarbonate (MEC), ethylmethylcarbonate (EMC), ethylene carbonate (EC), or propylene carbonate (PC); an alcohol-based solvent, such as ethyl alcohol, or isopropyl alcohol; a nitrile-based solvent, such as R-CN (where R is a straight, branched, or cyclic hydrocarbon group having a carbon number of 2 to 20, and may include a double-bonded aromatic ring or ether bond); an amide-based solvent, such as dimethylformamide; a dioxolane-based solvent, such as 1,3-dioxolane (DOL); a sulfolane-based solvent; or a mixture thereof.

The electrolyte solution may be, but is not limited to, an electrolyte solution with a concentration of 0.5 to 5 M.

The method may include adjusting an average diameter of the spherical lithium metal particulates by adjusting current density per unit area of a current applied to the plate-shaped support when the plurality of spherical lithium metal particulates are being grown.

The current density per unit area of the current applied to the plate-shaped support may be 0.1 to 5 mA/cm$^2$.

The average diameter of the spherical lithium metal particulates formed on the plate-shaped support may vary depending on the current density per unit area of the current applied to the plate-shaped support. For example, the formed spherical lithium metal particulates have a smaller average diameter as the current density per unit area increases.

Specifically, when a current starts to be applied to the plate-shaped support, spherical lithium metal particulates begin to be formed on the plate-shaped support, and after the spherical lithium metal particulates are formed on 95 % or more of an area of at least one surface of the plate-shaped support (i.e., when there is no longer any space for the lithium metal particulates to be formed on the plate-shaped support), the spherical lithium metal particulates may be formed in the form of a plurality of layers formed on the plate-shaped support.

In this case, an average thickness of a region (lithium metal thin film) formed by the spherical lithium metal particulates being in contact with each other may be controlled by adjusting the capacity per unit area when the current is applied to the plate-shaped support.

The capacity per unit area may be defined as 'current density per unit area × current application time', and the capacity per unit area may be adjusted by adjusting the current application time with the current density per unit area.

The average thickness of the region formed by the spherical lithium metal particulates being in contact with each other may be adjusted from 1 to 30 μm.

The plate-shaped support has a low electrical resistance and serves to transfer a current during charge and discharge, in which the support may include a metal foil including at least one selected from titanium, stainless steel (SUS), nickel, and molybdenum, or an alloy thereof.

The plate-shaped support is one in which at least one surface thereof may be coated with an inorganic material. Being coated with an inorganic material on at least one surface thereof may include, but is not limited to, being coated with an inorganic material on one surface of the plate-shaped support, or being coated with an inorganic material covering all of the plate-shaped support.

The inorganic material coated on at least one surface of the plate-shaped support may be coated with a thickness of 10 to 40 nm. When the thickness of the inorganic material layer coated on at least one surface of the plate-shaped support satisfies the range above, the lithium metal particulate formed on the plate-shaped support is formed in a spherical shape and may inhibit dendritic growth.

A method of coating an inorganic material on the plate-shaped support may not be limited as long as the method uses a conventional method of forming a thin film. For example, the inorganic material may be coated on the plate-shaped support by a method of sputtering or atomic layer deposition (ALD).

The inorganic material may include at least one inorganic oxide selected from alumina ($Al_2O_3$), titanium dioxide ($TiO_2$), barium titanate ($BaTiO_3$), and silicon dioxide ($SiO_2$). The plurality of spherical lithium metal particulates may be formed on a surface coated with the inorganic material in the plate-shaped support.

In addition, the method of manufacturing the lithium metal thin film composite may include stirring the electrolyte solution on at least one occasion selected from before applying the current, after applying the current, or simultaneously with applying the current, in the process of growing the plurality of spherical lithium metal particulates.

When the step of stirring is omitted in the process of growing the spherical lithium metal particulates, it is possible that a problem of dendritic growth of the lithium metal particulates on the plate-shaped support may occur. In the present invention, the dendritic growth may be inhibited through mass transfer effect by the stirring process and the spherical lithium metal particulates may be grown.

Specifically, when the concentration of lithium ions near the electrode surface reaches zero, which is referred to as sand's time, the lithium grows in the form of a dendrite. To slow down the sand's time, the electrolyte may be stirred to effectively transfer the lithium ions. This may prevent the lithium from growing in the form of a dendrite, which may cause the lithium to be nucleated and grow in the form of a sphere.

The step of stirring may include stirring before applying the current, stirring after applying the current, or stirring simultaneously with applying the current, and preferably may include stirring simultaneously with applying the current, that is, while the lithium metal particulates are being grown.

The stirring may include stirring at a stirring speed of 500 to 1,000 rpm, or 600 to 900 rpm, and may be performed at a stirring temperature of 10 to 50 °C, or 25 to 40 °C. In the step of stirring, when the stirring speed and the stirring temperature satisfy the range as described above, the dendritic growth is minimized, so that the growth of spherical lithium metal particulates is possible, and further, the average diameter of the spherical lithium metal particulates is uniform, and the plurality of spherical lithium metal particulates may be densely formed with no empty space therebetween.

The lithium supply source may be used without limitation as long as it is capable of providing lithium ions, for example, the lithium supply source may include lithium foil or the like, but is not limited thereto.

The method of manufacturing the lithium metal thin film composite, may use a two-electrode system with the plate-shaped support as a working electrode and the lithium supply as a counter electrode. For example, the two-electrode system may be a beaker cell or the like, but is not limited thereto.

In addition, the step of growing the plurality of spherical lithium metal particulates on the plate-shaped support may be performed under a condition in which oxygen and moisture are each 0.1 ppm or less. That is, the condition may be such that oxygen and moisture are each included in the two-electrode system at a content of 0.1 ppm or less.

In addition, the step of growing the plurality of spherical lithium metal particulates on the plate-shaped support may be performed under a condition of an inert gas (e.g., argon (Ar)).

The method of manufacturing the lithium metal thin film composite, may include growing a plurality of spherical lithium metal particulates on the plate-shaped support, followed by washing and drying the manufactured lithium metal thin film composite.

The step of washing may include using a solvent such as dimethyl ether (DME), but is not limited thereto. The step of drying may use a conventional method known in the art of removing an organic solvent.

Another aspect of the present invention provides a lithium secondary battery.

The lithium secondary battery may include a cathode; an anode including the lithium metal thin film composite described above; and an electrolyte.

The cathode may be manufactured, for example, by a method in which a cathode active material composition (slurry) including the cathode active material, a conductive material, a binding agent, and the like is molded into a certain shape, or in which the cathode active material composition is applied to a current collector such as an aluminum foil.

Specifically, the cathode active material composition in which the cathode active material, conductive material, binder, and solvent are mixed may be prepared. The cathode active material composition is coated directly onto a metal current collector to manufacture a cathode plate. Alternatively, the cathode plate may be manufactured by casting the cathode active material composition on a separate support and then laminating a film delaminated from the support on the metal current collector.

Carbon black, graphite particulates, or the like may be used as the conductive material, but are not limited thereto, and any material that can be used as a conductive material in the art may be used. For example, conductive materials such as graphite, such as natural graphite or synthetic graphite, carbon black, acetylene black, and ketchen black may be used.

As the binding agent, vinylidene fluoride/hexafluoropropylene copolymers, polyvinylidene fluoride (PVDF), polyacrylonitrile, polymethylmethacrylate, polytetrafluoroethylene and a mixture thereof, or styrene butadiene rubber-based polymers or the like may be used, but are not limited thereto and any binding agent that can be used in the art may be used.

N-methyl-2-pyrrolidone (NMP), acetone, or water may be used as the solvent, but the solvent is not limited thereto and may be any solvent that can be used in the art.

The content of the cathode active material, conductive material, binding agent or solvent may be included at a level conventionally used in the lithium secondary battery. Depending on the use and configuration of the lithium secondary battery, one or more of the conductive material, binding agent, and solvent may be omitted.

Next, the anode may be an anode including the lithium metal thin film composite of the present invention as described above. For example, the anode may include the lithium metal thin film and plate-shaped support of the present invention. The same as described above may be applied to the lithium metal thin film and plate-shaped support.

The electrolyte may include the lithium salt described above. For example, the lithium salt may include, but is not limited to, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$ (LiTFSI), lithium chloroborane, lithium low aliphatic carbonate, lithium phenylborate, or a mixture thereof.

The electrolyte may be one that is dissolved in an organic solvent. The same as described above for an organic solvent may be applied to the organic solvent, for example, the organic solvent may be an ester-based solvent, such as methyl acetate, ethyl acetate, $\gamma$-butyrolactone, or $\epsilon$-caprolactone; an ether-based solvent, such as dibutyl ether or tetrahydrofuran; a ketone-based solvent, such as cyclohexanone; an aromatic hydrocarbon solvent such as benzene, or fluorobenzene; a carbonate-based solvent, such as dimethylcarbonate (DMC), diethylcarbonate (DEC), methylethylcarbonate (MEC), ethylmethylcarbonate (EMC), ethylene carbonate (EC), or propylene carbonate (PC); an alcohol-based solvent, such as ethyl alcohol, or isopropyl alcohol; a nitrile-based solvent, such as R-CN (where R is a straight, branched, or cyclic hydrocarbon group having a carbon number of 2 to 20, and may include a double-bonded aromatic ring or ether bond); an amide-based solvent, such as dimethylformamide; a dioxolane-based solvent, such as 1,3-dioxolane (DOL); a sulfolane-based solvent; or a mixture thereof.

In addition, in some cases, the electrolyte may further include nitride, nitroxide, halide, sulfide, sulfide, hydroxide, or the like of Li, such as $Li_3N$, $LiNO_3$, $LiI$, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, and the like.

In addition, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinones, N,N-substituted imidazolidines, ethylene glycol dialkyl ether, ammonium salt, pyrrole, 2-methoxyethanol, aluminum trichloride, or the like may be added to the electrolyte solution for the purpose of improving charge and discharge characteristics, flame retardancy, and the like. In some cases, halogen-containing solvents such as carbon tetrachloride and ethylene trifluoride may be further included to impart non-flammability, carbon dioxide gas may be further included to improve high temperature preservation characteristics, and fluoro-ethylene carbonate (FEC), propene sultone (PRS), vinylene carbonate (VC), and the like may be further included.

Hereinafter, exemplary embodiments of the present invention will be described in detail so that those with ordinary skill in the art to which the present invention pertains may easily carry out the exemplary embodiments. However, the present disclosure may be implemented in various different ways and is not limited to the embodiments described herein. Next, the present invention will be described in more detail with specific examples.

## Example 1

(1) Using $Al_2O_3$-coated copper foil as a working electrode and 100 $\mu$m lithium foil as a counter electrode, 1 M $LiPF_6$ in EC:DEC = 1 : 1 as an electrolyte solution, a stirrable two-electrode beaker cell was manufactured. The beaker cell was assembled in a glove box under an argon (Ar) gas atmosphere.

(2) The capacity per unit area applied to the working electrode was fixed at 4 mA-h/$cm^2$, and the current density per unit area was adjusted to 0.1 mA/$cm^2$ to apply the current, while simultaneously facilitating mass transfer through stirring under the condition of stirring speed of 700 rpm and stirring temperature of 30 °C to electrodeposit lithium metal on the working electrode.

(3) The electrodeposited lithium metal thin film composite was recovered, washed with DME and dried to manufacture a lithium anode.

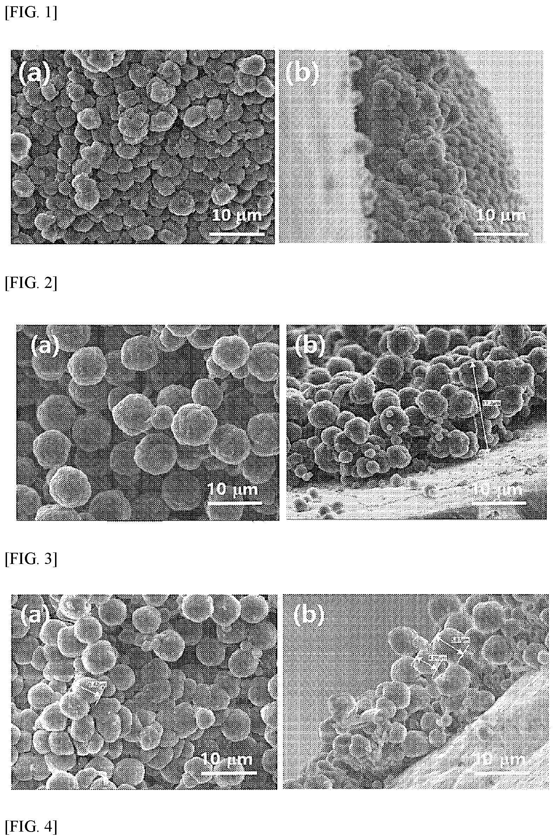

FIG. 1 illustrates the surface and cross-section of the lithium anode manufactured in Example 1 above, measured by SEM. In Example 1 above, it was confirmed that the lithium anode in which a plurality of spherical lithium metal particulates having an average diameter of 5 $\mu$m and an average thickness of 15 $\mu$m were formed was manufactured.

## Example 2

The lithium anode was manufactured in the same method as in Example 1 above, except that the capacity per unit area applied to the working electrode was fixed at 8 mA-h/cm$^2$ instead of 4 mA-h/cm$^2$, and the current density per unit area was adjusted to 1 mA/cm$^2$ instead of 0.1 mA/cm$^2$ in step (2) of Example 1 above.

FIG. 2 illustrates the surface and cross-section of the lithium anode manufactured in Example 2 above, measured by SEM. In Example 2 above, it was confirmed that the lithium anode in which a plurality of spherical lithium metal particulates having an average diameter of 7.5 $\mu$m and an average thickness of 20 $\mu$m were formed was manufactured.

## Example 3

In step (2) of Example 1 above, the lithium anode was manufactured in the same method as in Example 1 above, except that the capacity per unit area applied to the working electrode was fixed at 8 mA-h/cm$^2$ instead of 4 mA-h/cm$^2$, and the current density per unit area was adjusted to 3 mA/cm$^2$ instead of 0.1 mA/cm$^2$.

FIG. 3 illustrates the surface and cross-section of the lithium anode manufactured in Example 3 above, measured by SEM. In Example 3 above, it was confirmed that the lithium anode in which a plurality of spherical lithium metal particulates having an average diameter of 5.5 $\mu$m and an average thickness of 20 $\mu$m were formed was manufactured.

## Example 4

In step (2) of Example 1 above, the lithium anode was manufactured in the same method as in Example 1 above, except that the capacity per unit area applied to the working electrode was fixed at 8 mA-h/cm$^2$ instead of 4 mA-h/cm$^2$, and the current density per unit area was adjusted to 5 mA/cm$^2$ instead of 0.1 mA/cm$^2$.

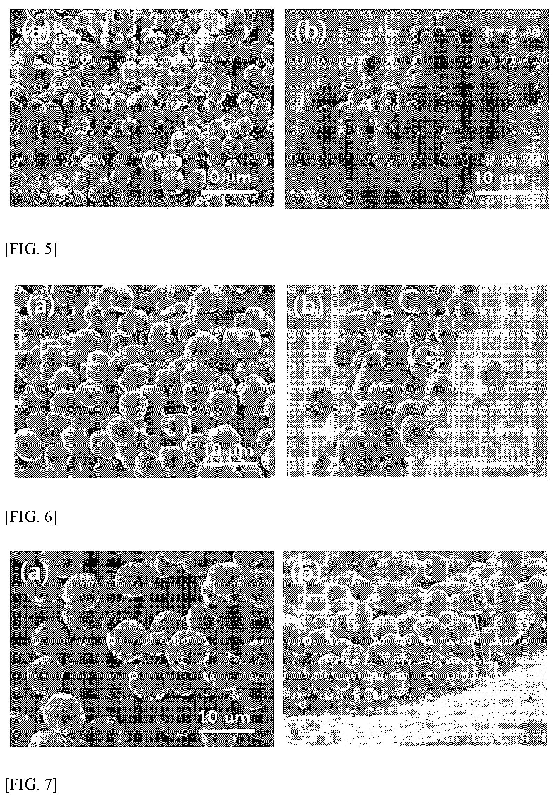

FIG. 4 illustrates the surface and cross-section of the lithium anode manufactured in Example 4 above, measured by SEM. In Example 4 above, it was confirmed that the lithium anode in which a plurality of spherical lithium metal particulates having an average diameter of 3.5 $\mu$m and an average thickness of 20 $\mu$m were formed was manufactured.

## Example 5

The lithium anode was manufactured in the same method as in Example 1 above, except that the current density per unit area was adjusted to 1 mA/cm$^2$ instead of 0.1 mA/cm$^2$ in step (2) of Example 1 above.

FIG. 5 illustrates the surface and cross-section of the lithium anode manufactured in Example 5 above, measured by SEM. In Example 5 above, it was confirmed that the lithium anode in which a plurality of spherical lithium metal particulates having an average diameter of 5 $\mu$m and an average thickness of 15 $\mu$m were formed was manufactured.

## Example 6

The lithium anode was manufactured in the same method as in Example 1 above, except that the current density per unit area was fixed at 1 mA/cm$^2$ instead of 0.1 mA/cm$^2$, and the capacity per unit area applied to the working electrode was adjusted to 8 mA-h/cm$^2$ instead of 4 mA-h/cm$^2$ in step (2) of Example 1 above.

FIG. 6 illustrates the surface and cross-section of the lithium anode manufactured in Example 6 above, measured by SEM. In Example 6 above, it was confirmed that the lithium anode in which a plurality of spherical lithium metal particulates having an average diameter of 7 $\mu$m and an average thickness of 20 $\mu$m were formed was manufactured.

## Comparative Example 1

The lithium anode was manufactured in the same method as in Example 6 above, except that stirring was omitted when the current was applied to the working electrode.

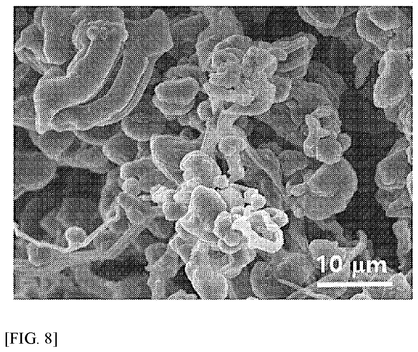

FIG. 7 illustrates a result of measuring the lithium metal particulates on the lithium anode manufactured in Comparative Example 1 by SEM. In Comparative Example 1 above, it was confirmed that the lithium metal particulates grew into a dendrite.

## Comparative Example 2

(1) A general 2032 coin-shaped cell was manufactured using copper foil as the working electrode and 100 $\mu$m lithium foil as the counter electrode, 1 M LiTFSI in DOL:DME = 1:1 + 1 wt% LiNOs as the electrolyte solution, and a PE separator. The coin cell was assembled in a glove box under an argon (Ar) gas atmosphere.

(2) The current density per unit area applied to the working electrode was fixed at 5 mA/cm$^2$, and the capacity per unit area was adjusted to 0.3 mA-h/cm$^2$ to electrodeposit lithium metal on the working electrode while the current was applied.

(3) The electrodeposited lithium metal thin film composite was recovered, washed with DME and dried to manufacture a lithium anode.

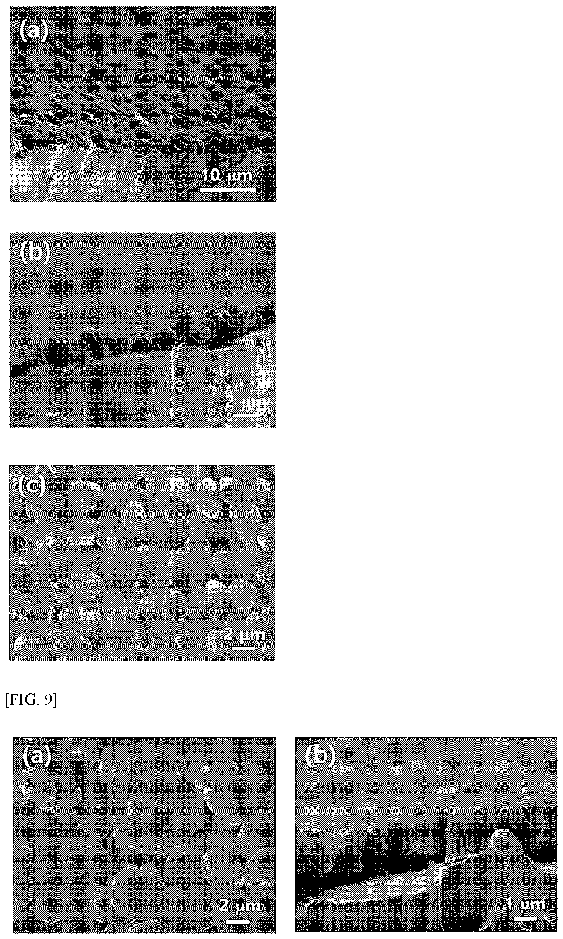

FIG. 8 illustrates results of measuring the lithium metal particulates on the lithium anode manufactured in Comparative Example 2 by SEM. In Comparative Example 2 above, the lithium metal particulates were only electrodeposited up to 0.3 mA-h/cm$^2$, resulting in a monolayer of lithium metal particulates.

**Comparative Example 3**

The lithium anode was manufactured in the same method as in Comparative Example 2 above, except that the current density per unit area was fixed at 5 mA/cm$^2$ and the capacity per unit area applied to the working electrode was adjusted to 1 mA-h/cm$^2$ in step (2) of Comparative Example 2 above.

FIG. 9 illustrates results of measuring the lithium metal particulates on the lithium anode manufactured in Comparative Example 3 by SEM. In Comparative Example 3 above, it was confirmed that the lithium metal particulates did not grow in multi-layer, and it was also confirmed that they did not grow in a spherical shape.

**Comparative Example 4**

The lithium anode was manufactured in the same method as in Comparative Example 2 above, except that the current density per unit area was fixed at 5 mA/cm$^2$ and the capacity per unit area applied to the working electrode was adjusted to 2 mA-h/cm$^2$ in step (2) of Comparative Example 2 above.

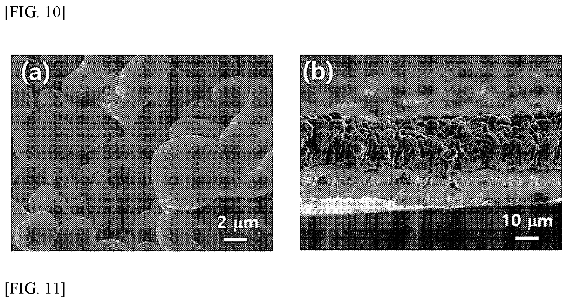

FIG. 10 illustrates results of measuring the lithium metal particulates on the lithium anode manufactured in Comparative Example 4 by SEM. In Comparative Example 4 above, it was confirmed that the lithium metal particulates did not grow in multi-layer, and it was also confirmed that they did not grow in a spherical shape.

**Experimental Example 1 - Evaluating capacity of lithium anode**

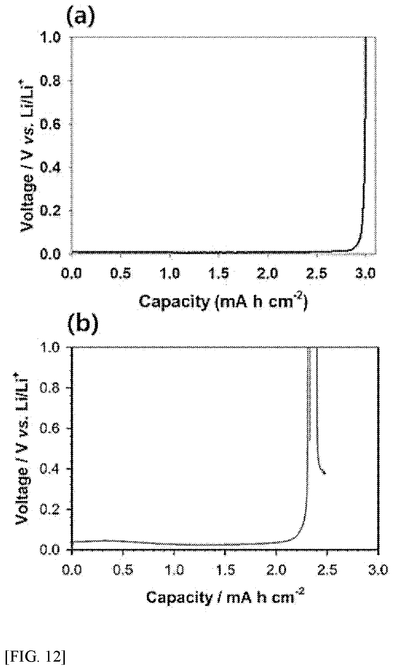

The 2032 coin cell was manufactured using the lithium anode including the spherical lithium metal particulates of Example 6 and Comparative Example 1 as the working electrode, 700 $\mu$m lithium foil as the counter electrode, and 4 M LiFSI in DME as the electrolyte solution, and FIG. 11 illustrates results of confirming the capacity by discharging the cell at a current density of 0.1 mA/cm$^2$ (Example 6: (a) and Comparative Example 1: (b)).

In Figure 11, it can be seen that the overvoltage profile spikes upward when a capacity of approximately 3 mA-h/cm$^2$ is discharged. It can be seen that a small overvoltage of approximately 10 mV is seen during the initial discharge, but when no more lithium is available and only the copper foil remains, the overvoltage profile rises to become similar to the voltage of Cu relative to Li (~3V).

That is, the lithium anode of Example 6 exhibits a general voltage profile of being discharged with a stable overvoltage of approximately 10 mV and then the overvoltage rising rapidly due to the lack of active lithium, which confirmed that the lithium anode of Example 6 exhibits a capacity of approximately 3 mA-h/cm$^2$. However, in case of Example 1, it was confirmed that the lithium anode has a capacity of approximately 2.2 mA-h/cm$^2$.

**Experimental Example 2** - **Evaluating the lifespan characteristics of lithium anode**

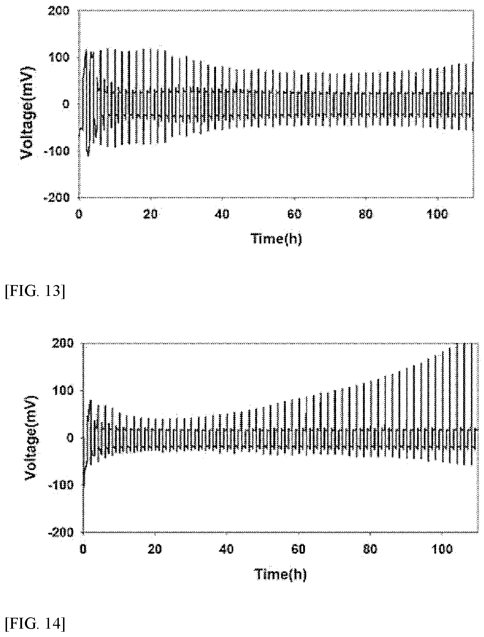

An asymmetric 2032 coin cell was manufactured using the lithium anode including the spherical lithium metal particulates of Example 6, Comparative Example 1 and Comparative Example 2 as the working electrode, 700 $\mu$m lithium foil as the counter electrode, 1 M LiTFSI in DOL:DME =1:1 with 1 wt% LiNO3 as the electrolyte solution, and results of evaluating the lifespan using a WBCS3000 battery cycler (Wonatech,Korea) (at 30 °C) are illustrated in FIGS. 12 to 14.

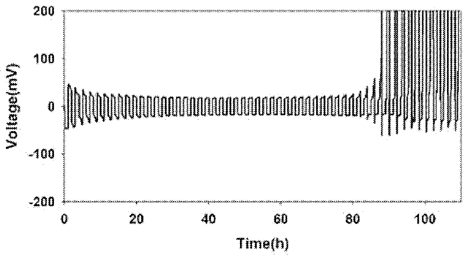

According to FIG. 12, it can be seen that the lithium anode of Example 6 exhibits the low overvoltage and stable lifespan characteristics, while according to FIGS. 13 and 14, it can be seen that the lifespan characteristics degrade in cases of Comparative Example 1 and Comparative Example 2.

## Claims

1. A lithium metal thin film composite comprising:

   a plate-shaped support having an inorganic material coated on a surface of at least one side thereof; and
   a lithium metal thin film formed by a plurality of spherical lithium metal particulates being in contact with each other on the plate-shaped support.

2. The lithium metal thin film composite of claim 1, wherein the spherical lithium metal particulates have an average diameter of 1 to 10 μm.

3. The lithium metal thin film composite of claim 1, wherein a standard deviation of the average diameter of the plurality of spherical lithium metal particulates is 0.3 to 1.2 μm.

4. The lithium metal thin film composite of claim 1, wherein porosity of a region composed of the plurality of spherical lithium metal particulates is 20 to 40 %.

5. The lithium metal thin film composite of claim 1, wherein an average thickness of a region formed by the spherical lithium metal particulates being in contact with each other is 1 to 30 μm.

6. The lithium metal thin film composite of claim 1, wherein the support comprises at least one selected from titanium, stainless steel (SUS), nickel, and molybdenum, or an alloy thereof.

7. The lithium metal thin film composite of claim 1, wherein the inorganic material comprises at least one inorganic oxide selected from alumina ($Al_2O_3$), titanium dioxide ($TiO_2$), barium titanate ($BaTiO_3$), and silicon dioxide ($SiO_2$).

8. A method of manufacturing a lithium metal thin film composite, the method comprising:

   growing a plurality of spherical lithium metal particulates on a plate-shaped support by applying a current to the plate-shaped support immersed in an electrolyte solution and a lithium supply source,
   wherein the plate-shaped support has at least one surface coated with an inorganic material, and
   wherein the method comprises stirring the electrolyte solution on at least one occasion selected from before applying the current, after applying the current, or simultaneously with applying the current.

9. The method of claim 8, comprising:
   adjusting an average diameter of the spherical lithium metal particulates by adjusting current density per unit area of the current applied to the plate-shaped support.

10. The method of claim 8, wherein current density per unit area of the current applied to the plate-shaped support is 0.1 to 5 $mA/cm^2$.

11. The method of claim 8, wherein the stirring is performed at a stirring speed of 500 to 1,000 rpm and at a stirring temperature of 10 to 50 °C.

12. The method of claim 8, wherein a two-electrode system with the plate-shaped support as the working electrode and the lithium supply as a counter electrode is used.

13. A lithium secondary battery, comprising:

   a cathode;
   an anode including the lithium metal thin film composite according to any one of claims 1 to 7; and
   an electrolyte.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

[FIG. 14]

**INTERNATIONAL SEARCH REPORT**

| International application No. |
| --- |
| **PCT/KR2022/002556** |

**A.  CLASSIFICATION OF SUBJECT MATTER**

**H01M 4/134**(2010.01)i; **H01M 4/38**(2006.01)i; **H01M 4/66**(2006.01)i; **H01M 4/1395**(2010.01)i; **H01M 4/04**(2006.01)i; **H01M 10/052**(2010.01)i

According to International Patent Classification (IPC) or to both national classification and IPC

**B.  FIELDS SEARCHED**

Minimum documentation searched (classification system followed by classification symbols)

H01M 4/134(2010.01); H01M 10/05(2010.01); H01M 10/052(2010.01); H01M 4/58(2010.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 음극 (lithium anode), 무기질 (inorganic), 지지체 (support), 리튬 입자 (lithium particle), 수지상 (dendritic), 코팅 (coating), 전지 (battery)

**C.  DOCUMENTS CONSIDERED TO BE RELEVANT**

| Category* | Citation of document, with indication, where appropriate, of the relevant passages | Relevant to claim No. |
| --- | --- | --- |
| X | KR 10-2014-0038930 A (LI-TEC BATTERY GMBH) 31 March 2014 (2014-03-31)<br>See abstract; and claims 1-4 and 10-12. | 1-7,13 |
| Y |  | 8-12 |
| Y | KR 10-2020-0053301 A (POSCO et al.) 18 May 2020 (2020-05-18)<br>See abstract; paragraphs [0082]-[0083] and [0091]; and claims 9-10. | 8-12 |
| A | TAN, L. et al. Atomic layer deposition-strengthened lithophilicity of ultrathin TiO2 film decorated Cu foil for stable lithium metal anode. Journal of Power Sources. 2020, vol. 463, thesis no. 228157, pp. 1-8.<br>See entire document. | 1-13 |
| A | ZHOU, H. et al. Protective coatings for lithium metal anodes: Recent progress and future perspectives. Journal of Power Sources. 2020, vol. 450, thesis no. 227632, pp. 1-18.<br>See entire document. | 1-13 |
| A | KR 10-2021-0050059 A (GRINERGY CO., LTD.) 07 May 2021 (2021-05-07)<br>See entire document. | 1-13 |

| ☐ Further documents are listed in the continuation of Box C. | ☑ See patent family annex. |
| --- | --- |

\*    Special categories of cited documents:
"A"  document defining the general state of the art which is not considered to be of particular relevance
"D"  document cited by the applicant in the international application
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| **22 July 2022** | **22 July 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** |  |
| Facsimile No. **+82-42-481-8578** | Telephone No. |

Form PCT/ISA/210 (second sheet) (July 2019)

International application No.

**PCT/KR2022/002556**

| Patent document cited in search report | | | Publication date (day/month/year) | Patent family member(s) | | | Publication date (day/month/year) |
|---|---|---|---|---|---|---|---|
| KR | 10-2014-0038930 | A | 31 March 2014 | CN | 103262310 | A | 21 August 2013 |
| | | | | DE | 102010054610 | A1 | 21 June 2012 |
| | | | | EP | 2652820 | A1 | 23 October 2013 |
| | | | | JP | 2014-503951 | A | 13 February 2014 |
| | | | | WO | 2012-079704 | A1 | 21 June 2012 |
| KR | 10-2020-0053301 | A | 18 May 2020 | CN | 112956049 | A | 11 June 2021 |
| | | | | EP | 3879602 | A1 | 15 September 2021 |
| | | | | EP | 3879602 | A4 | 29 December 2021 |
| | | | | JP | 2022-508082 | A | 19 January 2022 |
| | | | | KR | 10-2176349 | B1 | 09 November 2020 |
| | | | | US | 2022-0149347 | A1 | 12 May 2022 |
| | | | | WO | 2020-096164 | A1 | 14 May 2020 |
| KR | 10-2021-0050059 | A | 07 May 2021 | KR | 10-2340319 | B1 | 21 December 2021 |

Form PCT/ISA/210 (patent family annex) (July 2019)